# EUROPEAN PATENT APPLICATION

(11) **EP 3 358 490 A1**
(43) Date of publication of application: **08.08.2018**
(21) Application number: 17290011.0
(22) Date of filing: 03.02.2017
(51) Int. Cl.: G06F 21/62, H04L 29/06, H04W 12/02, G06F 17/30, H04L 29/08

(54) **METHOD FOR PROTECTING PRIVACY IN DATA QUERIES**

(71) Applicant: Alcatel Lucent, 91620 Nozay (FR)
(72) Inventor: JOY, Joshua, Los Angeles, CA 90025 (US)
(74) Representative: Louis Pöhlau Lohrentz

(57) **Abstract**

Embodiments provide a method for protecting privacy in data queries, the method comprises receiving, by a proxy node (2), from one or more clients (1) one or more answers of the one or more clients (1), respectively, to a query sent to the one or more clients (1) and adding, by the proxy node (2), noise to the one or more answers received from the one or more clients (1) such that respective associations between said one or more answers and corresponding one or more clients is made less certain. Embodiments further provide the proxy node (2) and a software program product used to implement the method.

## Description

### Field of the invention

The disclosure relates to the field of providing privacy protection in data queries, in particular, for example and without limitation, in streaming queries.

### Background

This section introduces aspects that may be helpful to facilitate a better understanding of the inventions. Accordingly, the statements of this section are to be read in this light and are not to be understood as admissions about what is in the prior art or what is not in the prior art. Any techniques or schemes described herein as existing or possible are presented as background for the present disclosure, but no admission is made thereby that these techniques and schemes were heretofore commercialized, or known to others besides the inventors.

Current privacy-preserving systems that offer client anonymity or unlinkability typically require the clients to provide and generate noisy coins to satisfy the differentially private mechanism. For example, in the field of differential privacy, anonymity may be achieved by adding a degree of randomness to the answer provided by each of a population of responders to a query. Such randomness may be generated by the equivalent of a coin flip. For instance, a responded may figuratively flip a coin and answer truthfully if the coin flip yields "tails". But if the flip result is "heads", the responder flips a second coin, and responds "yes" if heads, and "no" if tails. Thus each individual responder has plausible deniability regarding his/her response. The combination of the first coin flip and the conditional changing of the result of the first coin flip is sometimes referred to as a "noisy coin". Interpretation of a set of responses relies on knowledge of the randomization process. This response randomization can impose a significant computational burden on a systems, such as databases, that provide a large number of responses regarded sensitive personal stored by the system.

Therefore, it is a desire and objective to provide an improved method for privacy protection in data queries.

### Summary of the Invention

An objective of various embodiments is achieved by a method for protecting privacy in data queries. The method comprises receiving, by a proxy node, from one or more clients one or more answers of the one or more clients, respectively, to a query sent to the one or more clients and adding, by the proxy node, noise to the one or more answers received from the one or more clients such that respective associations between the one or more answers and corresponding one or more clients is made less certain.

An objective is further achieved by a proxy node adapted to receive from one or more clients one or more answers of the one or more clients, respectively, to a query sent to the one or more clients and to add noise to the one or more answers received from the one or more clients.

An objective is further achieved by a software program product, adapted to execute the described method, when the software program product is executed on a computer.

While being described with reference to a query, the method might be implemented in regard of a plurality of queries analogously.

Various embodiments might be implemented by the use of hardware, software or combination thereof.

Further features and advantages are achieved by preferred embodiments. Any embodiments described as preferred are not exclusive, but may be combinable so as to form further embodiments.

In some embodiments, after adding, by the proxy node, noise to the one or more answers received from the one or more clients, the method further comprises sending, by the proxy node, the one or more answers to an aggregator or to an analyst, in particular via the aggregator to the analyst.

In some embodiments, the query is sent to the one or more clients from the proxy node.

In some embodiments, the proxy node has received the query from the aggregator or from the analyst, preferably from the analyst via the aggregator.

In some embodiments, the proxy node is a separate entity. Preferably, the proxy node is an entity separate and different from the one or more clients. In particular, the proxy node is an entity separate and different from the one or more clients, the aggregator and the analyst.

In some embodiments, the method further comprises adding, by the proxy node, a delay, e.g. a time shift, to the one or more answers before sending the one or more answers to the aggregator or to the analyst.

In some embodiments, the analyst after receiving the one or more answers from the proxy node decrypts the one or more answers.

In some embodiments, the analyst after receiving the one or more answers from the proxy node tabulates the one or more answers.

In some embodiments, before adding, by the proxy node, noise to the one or more answers received from the one or more clients, the method further comprises sending, by the proxy node, the one or more answers received from the one or more clients to a data centre.

Preferably, the data centre includes a data storage.

In some embodiments, the method further comprises storing, by the data centre, the one more answers received from the proxy node in the data storage of the data centre, wherein the data centre has already stored in its data storage further answers received from the proxy node, wherein the further answers have been received by the proxy node from the one or more clients to previous queries sent to the one or more clients.

In some embodiments, the method further comprises receiving, by the data centre, a data request from an aggregator or from an analyst, preferably, from an analyst via an aggregator. In particular, this analyst and/or this aggregator might be identical to the analyst and/or the aggregator, respectively, mentioned in the context of the proxy node above, or might be different thereof.

In some embodiments, the method further comprises retrieving, by the data centre, out of its data storage answers which correspond to the data request. Preferably, answers corresponding to the data request are answers which are appropriate responses to the data request.

In some embodiments, the method further comprises sending, by the data centre, the answers retrieved out of its data storage to the aggregator or to the analyst, in particular via the aggregator to the analyst.

In some embodiments, the analyst after receiving (e.g. via the aggregator) the answers from the data centre decrypts and/or tabulates the answers.

In some embodiments, before sending, by the data centre, the answers retrieved out of its data storage to the aggregator or to the analyst, the method further comprises adding, by the data centre, noise to the answers retrieved out of its data storage.

In some embodiments, before sending, by the data centre, the answers retrieved out of its data storage to the aggregator or to the analyst, the method further comprises re-randomizing, by the data centre, the answers retrieved out of its data storage. The re-randomizing might be implemented before or after adding noise to the answers retrieved out of the data storage, preferably before adding noise to the answers retrieved out of the data storage.

In some embodiments, the data centre is a separate entity, preferably separate and different from the one or more clients. Preferably, the data centre is an entity separate and different from the one or more clients, the aggregator and the analyst.

In some embodiments, the proxy node might be termed message broker. In some embodiments, the data centre might be termed data warehouse, because the data centre may store a huge amount of data, in particular answers of the clients provided on the occasion of previous queries.

In some embodiments, the proxy node comprises the data centre and thus implements both the method steps and features described throughout this specification in regard of the proxy node and in regard of the data centre.

In some embodiments, the query is a streaming query, while in others the query is a batch-based query.

Preferably, a client is referred to also as a user. Preferably, a client is a private person. Otherwise preferably, a client is a node on the client side, thus a client node.

Preferably, the query sent to the one or more clients concerns data in regard of one or more of: the health, the age, the gender, the profession, the income, the consuming attitude, e.g. shopping, visited restaurants, holidays of the one or more clients.

In some embodiments, an aggregator is implemented by an operator which gathers answers from the one or more clients. In some embodiments, an aggregator is implemented by an operator which makes a survey.

In some embodiments, an analyst is one or more of: a government (of a country), a research institute, an assurance.

In some embodiments, there is only one aggregator, while in other embodiments, there are two or more aggregators.

Similarly, in some embodiments, there is only one analyst, while in other embodiments, there are two or more analysts.

In some embodiments, the query is implemented once, i.e. at a predetermined moment, preferably on data which is available at the predetermined moment. In such cases answers are given once by respective clients at that particular moment when is query is made.

In some embodiments, the query is implemented repeatedly, preferably updated continuously by answers which are given continuously. This means, in a preferred embodiment, based on a query, the one or more clients provide answers continuously. For example, the query may relate to the question of which web sites are visited by the one or more clients. Then, the one or more clients might provide the respective one or more answers in regard of the web sites visited. This might be implemented automatically by the one or more computers of the one or more clients by which the one or more clients enter the internet. However and usually, the one or more clients might change the visited web sites when time goes by. Therefore, the one or more clients continuously provide updated answers indicating the currently visited web sites.

The described embodiments should not be regarded as restrictive, but the scope of the invention is defined by the claims.

### Brief description of the figures

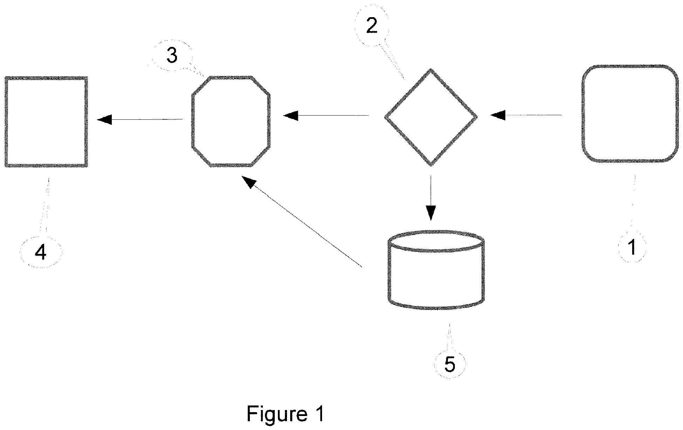

The features and advantages of the various embodiments will be more completely understood by appreciating the following detailed description of preferred embodiments with reference to the figure, wherein
- Fig. 1: depicts a schematic block diagram showing an overview of a method for protecting privacy in data queries

### Detailed description

Various embodiments are now described with reference to the drawings, wherein like reference numbers are used to refer to like elements throughout. In the following description, for purposes of explanation, numerous specific details are set forth in order to provide a thorough understanding of one or more embodiments. It may be evident, however, that such embodiment(s) may be practiced without these specific details. In other instances, well-known structures and devices are shown in block diagram form in order to facilitate describing one or more embodiments.

The inventors disclose various apparatus and methods that may be beneficially applied to, e.g., protecting privacy of subjects of data queries, e.g. clients. While such embodiments may be expected to provide improvements in performance of such apparatus and methods and/or privacy protection to such subjects, no particular result is a requirement of the present invention unless explicitly recited in a particular claim.

Fig. 1 presents a block-level diagram of a system in which one or more embodiments may be implemented. The system includes a client 1 and a proxy node 2. The client 1 and the proxy node 2 are each implemented as respective computing devices. Such computing devices may be, but need not be, otherwise conventional. In particular, each of the client 1 and the proxy node 2 are configured to execute steps of some of the methods described herein, and, more particularly, to communicate via a network, e.g. the internet. Via such a network, the proxy node 2 directs queries to the client 1, as described further below, and the client 1 directs an answer to the proxy node 2 in response to the queries. The proxy node 2 provides the client 1 a way to represent itself to the other components of the system; that is, the client 1 may have proxy authority to use the proxy node 2 to represent itself, so the proxy node 2 can represent the client 1. In various embodiments the proxy node 2 may direct the answer to an aggregator 3 or a data centre 5. The aggregator 3 and an analyst 4 described below are each implemented as a computing device. In various embodiments, the proxy node 2 is a separate entity, separate and different from any of the one or more clients 1, the aggregator 3 and the analyst 4. The data centre 5 may implement a database, e.g. a logical structure implemented on such a computing device. Such computing devices may be, but need not be, otherwise conventional. In particular, each of the aggregator 3, analyst 4, and the computing device on which the database is implemented are configured to execute steps of some of the methods described herein, and, more particularly, to communicate via a network, e.g. the internet. The aggregator 3 may receive multiple answers from the client 1, and/or may receive answers from multiple instances of the client 1, as described further below. The aggregator 3 then directs aggregated answers toward the analyst 4.

The client 1 may be, and typically is, an entity associated with a human individual that has an interest in maintaining privacy with respect to the answer. While the analyst may have a need for private information, such as intimate personal and/or medical information, regarding the individual, it is not necessary that the analyst know the source of the private information. Therefore, it may be, and in the following discussion is assumed without limitation to be, sufficient to create a large enough computational barrier to identifying a specific source of an answer as to effectively ensure anonymity of the individual with respect to his or her answers. Such a barrier is provided in various embodiments by the addition of "noise" to the answers by the proxy node 2. In this context, noise is defined as a numerical value that when added to an answer has the effect of making less certain an association between a client and an answer provided by that client.

The term "noise" is may be referred to and/or represented by "noisy coins", as recognized by those skilled in the art. See, e.g. Cynthia Dwork and Aaron Roth, "The Algorithmic Foundations of Differential Privacy", Foundations and Trends in Theoretical Computer Science, Vol. 9, Nos. 3-4 (2014) pp 211-407 (DOI: 10.1561/0400000042), and Christopher Ferrie and Robin Blume-Kohout, "Estimating the bias of a noisy coin", AIP Conference Proceedings 31st. Eds. Philip Goyal, et al. Vol. 1443. No. 1. AIP (2012). In various embodiments, adding noise to the one or more answers is implemented by adding noisy coins to the one or more answers. An answer to which noise has been added may be termed a "noisy answer".

Coins may also be referred to as differentially private coins, because they protect privacy, in that the more coins are added, the better is the privacy protection (thus "differential" protection). However, the information value of the answers may decline when the number of noisy coins is too large, because of the level of distortion created by the coins. Noise may also be referred to as dummy data or chaff data.

Noise may be considered to comprise wrong answers, e.g. answers that are not true. Thus in some contexts adding noise to the one or more answers comprises adding wrong answers to the one or more answers.

In cases in which the answers are implemented as a stream of digital bits (as is typical in computational data processing), adding noise may be implemented by adding to the bit stream additional bits, thereby distorting the correct content of the answers implemented by the bit stream. Thus, by the added bits, the answers are wrong in a certain degree which can be controlled by the amount of bits added to the bit stream. It may be assumed that the clients give correct (e.g. true) answers-thus adding noise to the one or more answers may be implemented by adding wrong answers to the correct answers of the clients. In various embodiments, the one or more clients do not add noise to their one or more answers.

It may be preferred in some cases that a query contains only a single question, and each client of the one or more clients provides only a signal answer to a query received by that client, namely an answer to the one question of the query. For simplicity, this is the situation primarily described throughout this specification. However, in some other embodiments, a query may contain more than one question, and each client of the one or more clients may give more than one answer to each of the one or more queries.

In an embodiment, the proxy node 2 receives from one or more clients 1 one or more answers of the one or more clients 1, respectively, to a query sent to the one or more clients 1. The query may be sent to the one or more clients 1 from the proxy node 2. The query may be sent to the one or more clients 1 from the analyst 4, from the aggregator 3, or from the analyst 4 via the aggregator 3 and/or via the proxy node 2 to the one or more clients 1.

The query might be related to data of the one or more clients 1 such as income, age or profession, etc. While described with reference to a query, a plurality of queries might be sent to the one or more clients 1. In such a case, what is herein described with reference to a query, applies analogously to the plurality of queries.

In an embodiment, the proxy node 2 adds noise to the one or more answers received from the one or more clients 1. In an embodiment, after adding noise to the one or more answers received from the one or more clients 1, the proxy node 2 sends the one or more answers to the aggregator 3 or to the analyst 4, e.g. to the analyst 4 via the aggregator 3. In response, the analyst 4 decrypts and/or tabulates the one or more answers received from the proxy node 2.

In an embodiment, the proxy node 2 adds a delay, e.g. a time shift, to the one or more answers before sending the one or more answers to the aggregator 3 or to the analyst 4. In such cases, the delay may operate to make it even more difficult to link a particular answer to a particular client 1 that gave this answer, thus providing enhanced privacy to the client 1. Such additional privacy may be particularly useful in cases in which there is a plurality of clients 1 and a plurality of respective answers, as it is typically expected to be the case.

In an embodiment, before adding noise to the one or more answers received from the one or more clients 1, the proxy node 2 sends the one or more answers received from the one or more clients 1 to the data centre 5. The proxy node 2 and/or the data centre 5 may be referred to as middle node(s), mix(es) or mixnet system, in that they are implemented between the aggregator/analyst on the one side and the one or more clients on the other side.

In various embodiments, the noise is generated and added to the answers by the proxy node 2 and/or the data centre 5. This is in contrast to conventional solutions, in which the noise is generated and added to the answers by the clients 1. Therefore, embodiments in the scope of the disclosure shift the burden of noise addition from the clients 1, in addition to providing anonymity for the clients 1. This aspect is important in particular for real-time streams which require high efficiency and performance in order to scale. Thus, the present such embodiments provide high efficiency and scalability.

Further, in some prior art implementations, where the privacy preserving system has been implemented at the client side, in particular by an aggregator which is provided by the same operator which controls the clients, the aggregator must be trusted to preserve the privacy of the clients. In some such implementations, the aggregator must distinguish between real answers and noisy coins, but also blindly add the noisy coins.

In contrast, in embodiments of the invention, since the proxy node 2 and the data centre 5 are operated as separate entities between the clients 1 on the one side and the aggregator 3/analyst 4 on the other side, the aggregator 3 is unable to breach the users' privacy, because the aggregator 3 only receives noisy answers. Thus, the aggregator 3 and the analyst 4 do not know which clients 1 provided which answer to a query, and have no way to distinguish between real answers and noisy coins. Thus, privacy of the user is not dependent on the trustworthiness of the aggregator 3 and the analyst 4.

In various embodiments, the data centre 5 stores the one or more answers received from the proxy node 2 in data storage of the data centre 5 not depicted explicitly in figure 1. Typically, the data centre 5 has stored a plurality of answers of previous queries, which may include a large number of previous answers given by the one or more clients 1 to previous queries.

The data centre 5 then receives a data request from the analyst 4. The data centre 5 determines if the data centre 5 has stored answers which correspond to the data request. In case the data centre 5 determines that amongst the answers stored (which as described above are previously received from the proxy node 2) are answers appropriate to respond to the data request, the data centre 5 retrieves these answers out of its data storage.

In various embodiments, the data centre 5 re-randomizes the answers retrieved out of its data storage. The re-randomizing might be implemented after or before adding noise to the answers (the step of adding noise by the data centre 5 is described below). In particular, in embodiments in which the answers are implemented by a binary bit stream, and more specifically, in particular in case the answers have been encrypted by means of Goldwasser-Micali encryption, re-randomizing might be provided by homomorphically implementing a XOR-operation on the bits of the answers with a randomly encrypted "0".
In embodiments in which the answers are implemented by a binary bit stream, queries may be performed as "streaming queries". In general, a streaming query, which also may be referred to herein as a continuous query, is configured to collect a subset of data from data streams to which the streaming query is applied (e.g., collecting values for a subset of parameters of the full set of parameters available from the data stream to which the streaming query is applied). The typical operation of streaming queries will be understood by one skilled in the art. In other embodiments the query may be a batch-based query, for which analysis may be performed at a time after the data are received.

In various embodiments, the data centre 5 adds noise to the answers retrieved out of its data storage before sending the answers to the analyst 4 or to the aggregator 3, or in particular to the analyst 4 via the aggregator 3.

In addition to the methods described above, a proxy node 2 is claimed to be used for implementing the described method. In particular, the proxy node 2 is adapted to receive from the one or more clients 1 one or more answers of the one or more clients 1, respectively, to a query sent to the one or more clients 1 and to add noise to the one or more answers received from the one or more clients 1 such that respective associations between the one or more answers and corresponding one or more clients 1 is made less certain.

Further, a software program product is claimed adapted to execute the method when executed on a computer.

A computer might be implemented in particular in the proxy node 2 and/or in the data centre 5.

The computer may be implemented as a single unit, a stand-alone device, or within a database, integrated in a computer and/or within a computer network. The computer may be implemented through the use of hardware, software and/or hardware capable of executing software in association with appropriate software.

More specifically, the computer can be comprised or implemented by circuit-based processes, including possible implementation as a single integrated circuit, such as an ASIC (Application Specific Integrated Circuit) or such as an FPGA (Field Programmable Gate Array), a multi-chip module, a single card, or a multi-card circuit pack. The functions of computer may be implemented as processing blocks in a software program. Such software may be employed in a digital signal processor, micro-controller, or general-purpose computer implemented as a single device or integrated in a computer network.

The computer may comprise program code embodied in tangible media, such as magnetic recording media, optical recording media, solid state memory, floppy diskettes, CD-ROMs, hard drives, or any other machine-readable storage medium, wherein, when the program code is loaded into and executed in the computer, the computer becomes an apparatus used for practicing the invention.

Although multiple embodiments of the present invention have been illustrated in the accompanying Drawings and described in the foregoing Detailed Description, it should be understood that the present invention is not limited to the disclosed embodiments, but is capable of numerous rearrangements, modifications and substitutions without departing from the invention as set forth and defined by the following claims.

## Claims

1. A method for protecting privacy in data queries conducted over the internet between one or more clients and a proxy node, the method comprising:
receiving, by the proxy node (2), from the one or more clients (1) one or more answers of the one or more clients (1), respectively, to a query sent to the one or more clients (1); and
adding, by the proxy node (2), noise to the one or more answers received from the one or more clients (1) such that respective associations between said one or more answers and corresponding one or more clients is made less certain.

2. The method according to claim 1, further comprising sending by the proxy node (2), after adding said noise, the one or more answers to an aggregator (3) or to an analyst (4).

3. The method according to claim 1, wherein the proxy node (2) directs the query to the one or more clients.

4. The method according to claim 3, wherein the proxy node (2) receives the query from the aggregator (3) or from the analyst (4).

5. The method according to claim 2, wherein the proxy node (2) is a computational entity different from the one or more clients (1), the aggregator (3) and the analyst (4).

6. The method according to claim 2, wherein the method further comprises delaying, by the proxy node (2), delivery of the one or more answers to the aggregator (3) or to the analyst (4).

7. The method according to claim 1, further comprising sending, by the proxy node (2), the one or more answers received from the one or more clients (1) to a data centre (5) before adding said noise to the one or more answers received from the one or more clients (1).

8. A method for protecting privacy in data queries conducted over the internet between one or more clients (1) and a proxy node (2), comprising:
storing, by a data centre (5), one more answers received from the proxy node (2), wherein the data centre (5) has previously stored further answers received from the proxy node (2), the further answers having been received by the proxy node (2) from the one or more clients (1) in response to previous queries sent to the one or more clients (1); and
adding noise to said one or more answers such that respective associations between said one or more answers and the corresponding one or more clients is made less certain.

9. The method according to claim 8, further comprising:
receiving, by the data centre (5), a data request from an aggregator (3) or from an analyst (4);
retrieving, by the data centre (5), answers out of the data storage of the data centre (5) which correspond to the data request; and
sending, by the data centre (5), the answers retrieved out of the data storage to the aggregator (3) or to the analyst (4).

10. The method according to claim 9, further comprising:
before sending, by the data centre (5), the answers retrieved out of the data storage to the aggregator (3) or to the analyst (4),
re-randomizing, by the data centre (5), the answers retrieved out of the data storage.

11. The method according to claim 9, wherein the data centre (5) is an entity different from the one or more clients (1), the aggregator (3) and the analyst (4).

12. The method according to claim 1, wherein the query is a streaming query.

13. A proxy node (2) adapted to receive from one or more clients (1) one or more answers of the one or more clients (1), respectively, to a query sent to the one or more clients (1) and to add noise to the one or more answers received from the one or more clients (1) such that respective associations between said one or more answers and corresponding one or more clients is made less certain.

14. A software program product, adapted to execute the method according to claims 1 - 12, when executed on a computer.
